# EUROPÄISCHE PATENTSCHRIFT

(11) **EP 1 478 080 B1**
(45) Veröffentlichungstag und Bekanntmachung des Hinweises auf die Patenterteilung: **14.05.2008**
(21) Anmeldenummer: 04004502.3
(22) Anmeldetag: 27.02.2004
(51) Int. Cl.: H02K 7/18

(54) **Turbomaschine**
Turbomachine
Turbomachine

(30) Priorität: 10.05.2003 DE 10321026
(43) Veröffentlichungstag der Anmeldung: 17.11.2004
(73) Patentinhaber: ATLAS COPCO ENERGAS GMBH, 50999 Köln (DE)
(72) Erfinder: Bosen, Werner, Dipl.-Ing., 51143 Köln (DE)
(74) Vertreter: Albrecht, Rainer Harald

(56) Entgegenhaltungen:
- GB-A- 2 335 713
- US-A- 3 187 188
- US-A- 5 085 093
- US-A- 5 605 045
- US-B1- 6 369 478

## Beschreibung

Die Erfindung betrifft eine Turbomaschine, mit mindestens einem Laufrad, welches an einem fliegenden Ende einer gelagerten ersten Welle befestigt ist, und mit einem Elektro-Läufer einer elektrischen Maschine, der über eine Kupplung mit dem dem Laufrad gegenüberliegenden Ende der ersten Welle verbunden ist, wobei der Elektro-Läufer zwischen der ersten Welle und einer zweiten drehbar gelagerten Welle angeordnet ist, die fluchtend zur ersten Welle ausgerichtet und ebenfalls über eine Kupplung mit dem Elektro-Läufer verbunden ist.

Bei einer Turbomaschine entsprechend dem zuvor skizzierten Aufbau, wie sie in der US 3 187 188 beschrieben wird, sind die jeweiligen "Kupplungen" als gleichsam drehfeste Steckverbindungen zwischen den Wellen und dem Elektro-Läufer ausgeführt. Dadurch können Unwuchtprobleme entstehen.

Darüber hinaus kennt man aus der Praxis Turbomaschinen, bei welchen die Welle mit dem daran befestigten Laufrad sowie der Elektro-Läufer der elektrischen Maschine jeweils separat gelagert werden. Die Lager der elektrischen Maschine sind hierbei beidseitig des Elektro-Läufers angeordnet. Es bestehen sehr hohe Anforderungen an die Fertigungsgenauigkeit der Lagersitze im Gehäuse der elektrischen Maschine. Dies ist insbesondere bei der Verwendung schnell laufender Hochgenauigkeits-Wälzlager oder Gaslager von Bedeutung, die eine extrem eng tolerierte Fluchtungsgenauigkeit der beiden Lager zueinander verlangen, so dass die bekannte Konstruktion sehr aufwändig ist und hohe Kosten verursacht. Darüber hinaus wird selbst bei präzisester Fertigung die Fluchtungsgenauigkeit aller beteiligten Rotor- und Gehäuseteile im Betrieb häufig durch gegenläufige Temperaturverzüge im Rotor und

Gehäuse wieder zunichte gemacht, da in schnell laufenden elektrischen Maschinen eine erhebliche Wärmeentwicklung vorliegt.

Aus dem Dokument DE-A-4017226 ist ein Getriebe bekannt, deren Zahnräder bzw. Wellen über Membrankupplungen untereinander verbunden sind.

Der Erfindung liegt daher die Aufgabe zu Grunde, eine Turbomaschine mit den eingangs beschriebenen Merkmalen anzugeben, deren Lageranordnung einfacher ausgebildet ist und dennoch eine große Laufruhe bei hohen Turbodrehzahlen gewährleistet.

Erfindungsgemäß wird diese Aufgabe dadurch gelöst, dass die Kupplungen als einen axialen Ausgleich zulassende Doppel-Membrankupplungen ausgebildet sind, wobei der Elektro-Läufer ohne eigene Lagerung als Kupplungszwischenstück zwischen den Kupplungen angeordnet ist und Kupplungselemente aufweist, die ohne radiales Spiel mit Kupplungsgegenelementen an Wellenenden der Wellen zusammenwirken.

Da der Elektro-Läufer der elektrischen Maschine über Kupplungen ohne eigene Lagerung auf den Wellen abgestützt ist, entfällt hierbei eine aufwändige Lagerung des Elekro-Läufers der elektrischen Maschine, so dass die beschriebenen Fluchtungsprobleme bei der Lagerung des Elektro-Läufers nicht mehr bestehen. Die Montage und Ausrichtung der Lagersitze der erfindungsgemäßen Turbomaschine wird hierdurch erheblich vereinfacht.

Durch die als Doppel-Membran-Kupplungen ausgebildeten Kupplungen ergibt sich ein einfacher konstruktiver Aufbau, der bei radial spielfreier Anordnung gleichzeitig axiale Verschiebungen des Elektro-Läufers, zum Beispiel aufgrund von Wärmedehnungen, kompensiert. Die Doppel-Membrankupplungen können mit dem Elektro-Läufer der elektrischen Maschine separat ausgewuchtet werden und sind daher besonders gut für den Betrieb bei hohen Turbodrehzahlen bis zu 50.000 Umdrehungen pro Minute und mehr geeignet.

Vorzugsweise ist an dem dem Elektro-Läufer gegenüberliegenden Ende der zweiten Welle ebenfalls ein Laufrad fliegend befestigt. Die zweite Stufe der Turbomaschine erfordert kein zusätzliches Lager. Im Vergleich zu bekannten Turbomaschinen ergibt sich eine deutlich einfachere Lageranordnung. Die erfindungsgemäße Turbomaschine ist flexibel einsetzbar. So kann das Kupplungszwischenstück als Elektro-Läufer eines Elektromotors, eines Generators oder einer Motor-/Generator-Wechselmaschine ausgebildet sein. Die erfindungsgemäße Turbomaschine kann daher in Kombination mit der elektrischen Maschine jeweils ein- oder zweistufig als Turboverdichter mit Motor oder als Expansionsturbine mit Generator ausgebildet sein. Es besteht ferner die Möglichkeit, die Turbomaschine jeweils mit einem Verdichter- und einem Turbinenlaufrad auszustatten und mit einem Motor bei verdichterseitigem Leistungsüberschuss bzw. mit einem Generator bei turbinenseitigem Leistungsüberschuss zu betreiben. Bei schwankendem Leistungsüberschuss kann in diesem Falle auch eine Motor-/Generator-Wechselmaschine zum Einsatz kommen.

Vorzugsweise bildet jede Welle gemeinsam mit ihrer Lagerung eine in sich abgeschlossene Baugruppe. Hierdurch ist eine einfache und kostengünstige Vorfertigung möglich. Die Lagerungen der beiden Wellen besitzen hierbei jeweils mindestens zwei voneinander beabstandete Lager zur Aufnahme von axialen und radialen Kräften. Vorzugsweise weisen die Lagerungen der Wellen Hochgenauigkeits-Wälzlager oder gasgelagerte Lagerträger auf, die bei vergleichsweise geringem Herstellungsaufwand eine äußerst hohe Laufgenauigkeit gewährleisten.

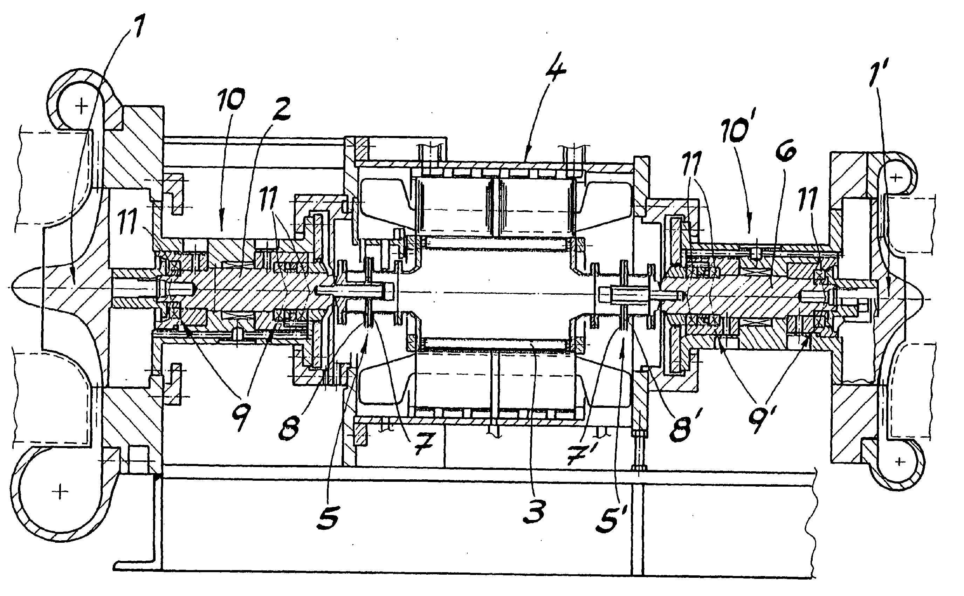

Im Folgenden wird die Erfindung anhand einer lediglich ein Ausführungsbeispiel darstellenden Zeichnung erläutert. Die einzige Figur zeigt einen Querschnitt durch eine erfindungsgemäße Turbomaschine. Die Turbomaschine weist ein Laufrad 1 auf, welches an einem fliegenden Ende einer gelagerten ersten Welle 2 befestigt ist. Ein Elektro-Läufer 3 einer ausschnittsweise dargestellten elektrischen Maschine 4 ist über eine Kupplung 5 mit dem dem Laufrad 1 gegenüberliegenden Ende der ersten Welle 2 fluchtend verbunden. Der Elektro-Läufer 3 ist zwischen der ersten Welle 1 und einer zweiten drehbar gelagerten Welle 6 angeordnet, die fluchtend zur ersten Welle 1 ausgerichtet und ebenfalls über eine Kupplung 5' an den Läufer 3 angeschlossen ist. Der Elektro-Läufer 3 ist ohne eigene Lagerung als Kupplungszwischenstück zwischen den Kupplungen 5, 5' angeordnet und weist Kupplungselemente 7, 7' auf, die ohne radiales Spiel mit Kupplungsgegenelementen 8, 8' an den Wellenenden zusammenwirken. Die Kupplungselemente 7, 7' und Kupplungsgegenelemente 8, 8' sind drehfest miteinander verbunden, so dass der Läufer 3 und das Laufrad 1 mit der gleichen Drehzahl betrieben werden. Da der Läufer 1 über die beiden Kupplungen 5, 5' auf den beiden Wellen 2, 6 abgestützt ist, ist keine separate Lagerung des Elektro-Läufers 3 erforderlich. Hierdurch wird der Herstellungsaufwand bzgl. der Lagerung der Turbomaschine erheblich reduziert. Gleichzeitig ist eine hohe Laufruhe bei großen Turbodrehzahlen erreichbar, da die Lagerungen 9, 9' der beiden Wellen 2, 6 einen großen Abstand vom Elektro-Läufer 3 aufweisen und daher von der Wärmeentwicklung des Elektro-Läufers 3 nur geringfügig beeinflusst werden. Im Ausführungsbeispiel ist an dem dem Elektro-Läufer 3 gegenüberliegenden Ende der zweiten Welle 6 ebenfalls ein Laufrad 1' fliegend befestigt. Diese zweistufige Ausführung der Turbomaschine zeichnet sich insbesondere dadurch aus, dass die zweite Stufe keine zusätzliche Lagerung erfordert. Gegenüber den in der Praxis bekannten Lagerungen zweistufiger Turbomaschinen ergeben sich erhebliche Vereinfachungen hinsichtlich der Lageranordnung. Die Turbomaschine ist flexibel einsetzbar, da das Kupplungszwischenstück 3 als Läufer eines Elektromotors oder eines Generators ausgebildet sein kann. In Kombination mit der angeschlossenen elektrischen Maschine 4 kann die Turbomaschine somit jeweils zweistufig als Turboverdichter mit Motor oder aber als Expansionsturbine mit Generator betrieben werden. Es besteht auch die Möglichkeit, mit den beiden Laufrädern 1, 1' jeweils einen Verdichter und eine Turbine zu betreiben, wobei die elektrische Maschine 4 bei verdichterseitigem Leistungsüberschuss als Motor und bei turbinenseitigem Leistungsüberschuss als Generator ausgebildet ist. Bei schwankendem Leistungsüberschuss kann das Kupplungszwischenstück 3 auch als Elektro-Läufer 3 einer Motor-/Generator-Wechselmaschine ausgebildet sein.

Im Ausführungsbeispiel sind die Kupplungen 5, 5' als Doppel-Membrankupplungen ausgebildet, die einen axialen Ausgleich zulassen. Diese Kupplungen 5, 5' weisen einen einfachen Aufbau auf. Sie kompensieren axiale Verschiebungen des Kupplungszwischenstückes 3, beispielsweise auf Grund von Wärmedehnungen, und stützen das Kupplungszwischenstück 3 radial spielfrei auf den beiden Wellen 2, 6 ab. Die Doppel-Membrankupplungen 5, 5' können gemeinsam mit dem Kupplungszwischenstück separat ausgewuchtet werden und sind daher besonders gut für hohe Drehzahlen bis zu 50.000 Umdrehungen pro Minute und mehr geeignet. Im Ausführungsbeispiel bildet jede Welle 2, 6 gemeinsam mit ihrer Lagerung 9, 9' eine in sich abgeschlossene Baugruppe 10, 10'. Die Lagerungen 9, 9' weisen hierbei jeweils drei voneinander beabstandete Schrägkugellager 11 zur Aufnahme axialer und radialer Kräfte auf. Die Baugruppen 10, 10' ermöglichen eine kostengünstige Vorfertigung und somit eine einfache Endmontage der Turbomaschine. Die Schrägkugellager 11 sind jeweils als kostengünstige Hochgenauigkeits-Wälzlager ausgebildet. Eine Lagerung mit Hilfe gasgelagerter Lagerträger ist hierdurch jedoch nicht ausgeschlossen.

## Patentansprüche

1. Turbomaschine, mit mindestens einem Laufrad (1), welches an einem fliegenden Ende einer gelagerten ersten Welle (2) befestigt ist, und mit einem Elektro-Läufer (3) einer elektrischen Maschine (4), der über eine Kupplung (5) mit dem dem Laufrad (1) gegenüberliegenden Ende der ersten Welle (2) verbunden ist, wobei
- der Elektro-Läufer (3) zwischen der ersten Welle (2) und einer zweiten drehbar gelagerten Welle (6) angeordnet ist, die fluchtend zur ersten Welle (2) ausgerichtet ist und ebenfalls über eine Kupplung (5') mit dem Elektro-Läufer (3) verbunden ist,
**dadurch gekennzeichnet, dass**
- die Kupplungen (5, 5') als einen axialen Ausgleich zulassende Doppel-Membrankupplungen (5, 5') ausgebildet sind, wobei
- der Elektro-Läufer (3) ohne eigene Lagerung als Kupplungszwischenstück zwischen den Kupplungen (5, 5') angeordnet ist und Kupplungselemente (7, 7') aufweist, die ohne radiales Spiel mit Kupplungsgegenelementen (8, 8') an Wellenenden der Wellen (2, 6) zusammenwirken.

2. Turbomaschine nach Anspruch 1, **dadurch gekennzeichnet, dass** an dem dem Elektro-Läufer (3) gegenüberliegenden Ende der zweiten Welle (6) ebenfalls ein Laufrad (1') fliegend befestigt ist.

3. Turbomaschine nach Anspruch 1 oder 2, **dadurch gekennzeichnet, dass** das Kupplungszwischenstück (3) als Elektro-Läufer eines Elektromotors, eines Generators oder einer Motor-/Generator-Wechselmaschine ausgebildet ist.

4. Turbomaschine nach einem der Ansprüche 1 bis 3, **dadurch gekennzeichnet, dass** jede Welle (2, 6) gemeinsam mit ihrer Lagerung (9, 9') eine in sich abgeschlossene Baugruppe (10, 10') bildet.

5. Turbomaschine nach einem der Ansprüche 1 bis 4, **dadurch gekennzeichnet, dass** die Lagerungen (9, 9') der Wellen (2, 6) Hochgenauigkeits-Wälzlager oder gasgelagerte Lagerträger aufweisen.

## Claims

1. A turbomachine, comprising at least one running wheel (1), which is affixed at an unsupported end of a mounted first shaft (2) and comprising an electric rotor (3) of an electrical machine (4) which is connected via a coupling (5) to the end of the first shaft (2) opposite to the running wheel (1), wherein
- the electric rotor (3) is disposed between the first shaft (2) and a second rotatably mounted shaft (6) which is aligned in alignment with the first shaft (2) and is also connected via a coupling (5') to the electric rotor (3),
**characterised in that**
- the couplings (5, 5') are configured as double membrane couplings (5, 5') which allow axial compensation, wherein
- the electric rotor (3) is disposed without its own mounting as a coupling intermediate piece between the couplings (5, 5') and has coupling elements (7, 7') which cooperate without radial play with coupling counter-elements (8, 8') at the shaft ends of the shafts (2, 6).

2. The turbomachine according to claim 1, **characterised in that** a running wheel (1') is also affixed in an unsupported manner at the end of the second shaft (6) opposite to the electric rotor (3).

3. The turbomachine according to claim 1 or 2, **characterised in that** the coupling intermediate piece (3) is configured as an electric rotor of an electric motor, a generator or a motor/generator alternating machine.

4. The turbomachine according to any one of claims 1 to 3, **characterised in that** each shaft (2, 6) together with its mounting (9, 9') forms an assembly (10, 10') which is closed in itself.

5. The turbomachine according to any one of claims 1 to 4, **characterised in that** the mountings (9, 9') of the shafts (2, 6) comprise high-precision roller bearings or gas-mounted bearing carriers.

## Revendications

1. Turbomachine comportant au moins un rotor (1) fixé à l'extrémité en porte-à-faux d'un premier arbre (2) monté dans des paliers ainsi qu'un rotor électrique (3) d'une machine électrique (4), relié à l'extrémité du premier arbre (2) à l'opposé de celle du rotor (1) par un embrayage (5),
- le rotor électrique (3) étant monté entre le premier arbre (2) et un second arbre (6) installé dans des paliers, ce second arbre étant aligné sur le premier arbre (2) en étant également relié par un embrayage (5') au rotor électrique (3),
**caractérisée en ce que**
- les embrayages (5, 5') sont réalisés sous la forme d'embrayages à double membrane (5, 5') permettant une compensation axiale et
- le rotor électrique (3) est installé sans palier propre comme pièce intermédiaire d'embrayage entre les embrayages (5, 5') et il comporte des éléments d'embrayage (7, 7') qui coopèrent sans jeu radial avec les éléments d'embrayage (8, 8') à l'extrémité des arbres (2, 6).

2. Turbomachine selon la revendication 1,
**caractérisée en ce que**
l'extrémité du second arbre (6) opposée à celle du rotor électrique (3) porte également un rotor (11 fixé de manière flottante.

3. Turbomachine selon la revendication 1 ou 2,
**caractérisée en ce que**
la pièce intermédiaire (3) de l'embrayage est le rotor électrique d'un moteur électrique, celui d'un générateur ou celui d'une machine combinée moteur/générateur.

4. Turbomachine selon l'une des revendications 1 à 3,
**caractérisée en ce que**
chaque arbre (2, 6) forme en commun avec son palier (9, 9'), un ensemble refermé sur lui-même (10, 10').

5. Turbomachine selon l'une des revendications 1 à 4,
**caractérisée en ce que**
les paliers (9, 9') des arbres (2, 6) ont des paliers à roulement de grande précision ou sont des supports de paliers à gaz.
